(19) Europäisches Patentamt
European Patent Office
Office européen des brevets

(11) EP 0 582 692 B1

(12) **EUROPÄISCHE PATENTSCHRIFT**

(45) Veröffentlichungstag und Bekanntmachung des Hinweises auf die Patenterteilung:
**22.04.1998 Patentblatt 1998/17**

(21) Anmeldenummer: **93902011.1**

(22) Anmeldetag: **22.01.1993**

(51) Int Cl.[6]: **C07F 9/50**, C07F 9/6568, C07F 9/655, C07F 9/6553

(86) Internationale Anmeldenummer:
**PCT/CH93/00016**

(87) Internationale Veröffentlichungsnummer:
**WO 93/15089 (05.08.1993 Gazette 1993/19)**

(54) **DIPHOSPHINLIGANDEN**

DIPHOSPHINE LIGANDS

LIGANDS DIPHOSPHINIQUES

(84) Benannte Vertragsstaaten:
**AT BE CH DE DK ES FR GB IT LI NL**

(30) Priorität: **31.01.1992 CH 290/92**
**18.01.1993 CH 132/93**

(43) Veröffentlichungstag der Anmeldung:
**16.02.1994 Patentblatt 1994/07**

(73) Patentinhaber: **F. HOFFMANN-LA ROCHE AG**
**4002 Basel (CH)**

(72) Erfinder:
- **BROGER, Emil, Albin**
**CH-4312 Magden (CH)**
- **CEREGHETTI, Marco**
**CH-4058 Basel (CH)**

(74) Vertreter: **Cottong, Norbert A. et al**
**F.Hoffmann-La Roche AG**
**Patent Department (PLP),**
**124 Grenzacherstrasse**
**4070 Basel (CH)**

(56) Entgegenhaltungen:
**EP-A- 0 104 375**
**EP-A- 0 408 338**
**WO-A-92/16536**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 582 692 B1

## Beschreibung

Die vorliegende Erfindung betrifft neue, racemische und optisch aktive Phosphorverbindungen der allgemeinen Formel

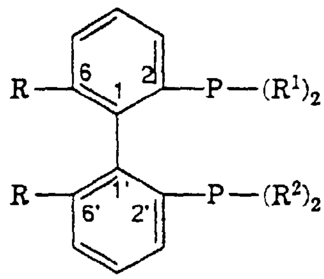

I

worin R niederes Alkyl, niederes Alkoxy, Hydroxy oder eine geschützte Hydroxygruppe bedeutet und $R^1$ und $R^2$ voneinander verschieden sind und niederes Alkyl, Cycloalkyl, Aryl, einen fünfgliedrigen Heteroaromaten oder eine Gruppe der Formel

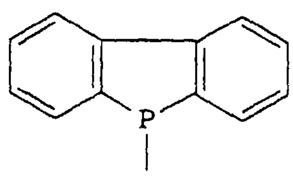

darstellen.

Die EP-A-0 408 338 beschreibt asymmetrische Synthesen von Karbonsäuren und Estern aus deren ungesättigten Vorstufen mittels 2,2'- bis(dicyclohexylphosphino) 6,6'-dimethyl-1,1'-biphenyl. Die asymmetrische Reaktion erfolgt an einem Ruthenium- oder Rhodium-Metallkomplex. Die EP-A-0 104 375 offenbart phosphorhaltige Biphenylderivate und deren Verwendung für asymmetrische Hydrierungen.

Die Erfindung betrifft ferner die Herstellung der Phosphorverbindungen der Formel I, sowie deren Verwendung für enantioselektive Reaktionen, wie z.B. asymmetrische Hydrierungen, enantioselektive Wasserstoffverschiebungen in prochiralen, allylischen Systemen, und dergleichen.

Der Ausdruck "niederes Alkyl" bedeutet, im Rahmen der vorliegenden Erfindung, geradkettige oder verzweigte Alkylgruppen mit 1 bis 4 Kohlenstoffatomen wie Methyl, Aethyl, Propyl, Isopropyl, n-Butyl, Isobutyl und tert. Butyl. Der Ausdruck "niederes Alkoxy" bedeutet Gruppen, in denen der Alkylrest die vorhergehende Bedeutung hat. Als Schutzgruppen für die Hydroxygruppe kommen, im Rahmen der vorliegenden Erfindung, insbesondere in Frage die üblichen Aether-bildenden Gruppen, wie z.B. Benzyl, Allyl, Benzyloxymethyl, niederes Alkoxymethyl oder auch 2-Methoxyäthoxymethyl und dergleichen. Der Ausdruck "Cycloalkyl" bedeutet hier drei- bis siebengliedrige Ringe wie Cyclopropyl, Cyclobutyl, Cyclopentyl, Cyclohexyl und Cycloheptyl, insbesondere Cyclopentyl und Cyclohexyl. Der Ausdruck "Aryl" bedeutet im Rahmen der vorliegenden Erfindung insbesondere den Phenylrest, welcher sowohl unsubstituiert als auch in ortho, meta oder para-Stellung oder auch mehrfach substituiert sein kann. Als Substituenten kommen hier in Frage Phenyl, niedere Alkyl- oder niedere Alkoxygruppen, vorzugsweise Methyl- oder Methoxygruppen, oder auch Di-niederes Alkylamino, vorzugsweise Dimethylaminogruppen, sowie Fluor oder auch Trialkylsilyl, wie Trimethylsilyl und dergleichen. Der Ausdruck kann zudem auch Naphthyl bedeuten. Der Ausdruck "fünfgliedriger Heteroaromat" steht, im Rahmen der vorliegenden Erfindung, für einen Substituenten der Formel

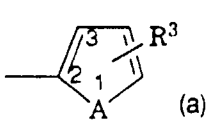 (a) 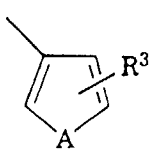 (b) 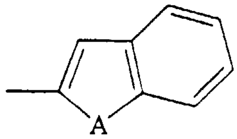 (c) 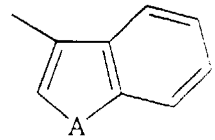 (d)

In den Substituenten der Formeln (a) bis (d) wiederum bedeutet A Sauerstoff, Schwefel oder $-NR^4$. Der Substituent $R^3$ bedeutet hier Wasserstoff, niederes Alkyl, insbesondere Methyl, oder niederes Alkoxy, insbesondere Methoxy, und $R^4$ steht für niederes Alkyl, vorzugsweise Methyl.

Unter dem im nachfolgenden verwendeten Ausdruck "austretende Gruppe" sind im Rahmen der vorliegenden Erfindung Gruppen zu verstehen, wie z.B. Halogen, insbesondere Chlor und Brom, sowie Alkoxygruppen wie Methoxy und dergleichen.

Die Phosphorverbindungen der Formel I können sowohl in racemischer als auch in optisch aktiver Form vorliegen. Bevorzugte Verbindungen der Formel I sind solche, worin R Methoxy oder Methyl bedeutet. Ferner sind auch noch diejenigen bevorzugt, worin $R^1$ und $R^2$ Phenyl, p-Tolyl, Cyclopentyl, Cyclohexyl, 2- oder 3-Furyl oder 2-Thienyl darstellen. Besonders bevorzugte Verbindungen der Formel I sind:

(RS)-P,P-Dicyclohexyl-P',P'-diphenyl-(6,6'-dimethylbiphenyl-2,2'-diyl)diphosphin,
(R)- oder (S)-P,P-Dicyclohexyl-P',P'-diphenyl-(6,6'-dimethylbiphenyl-2,2'-diyl)diphosphin,
(RS)-P,P-Dicyclohexyl-P',P'-di-p-tolyl-(6,6'-dimethylbiphenyl-2,2'-diyl)diphosphin,
(R)- oder (S)-P,P-Dicyclohexyl-P',P'-di-p-tolyl-(6,6'-dimethylbiphenyl-2,2'-diyl)diphosphin,
(RS)-P,P-Diphenyl-P',P'-di-2-thienyl-(6,6'-dimethylbiphenyl-2,2'-diyl)diphosphin,
(R)- oder (S)-P,P-Diphenyl-P',P'-di-2-thienyl-(6,6'-dimethylbiphenyl-2,2'-diyl)diphosphin,

sowie die entsprechenden 6,6'-Dimethoxybiphenyle.

Die erfindungsgemässen Verbindungen der Formel I können in an sich bekannter Weise hergestellt werden. Dies kann z.B. dadurch erfolgen, dass man eine racemische oder optisch aktive Verbindung der allgemeinen Formel

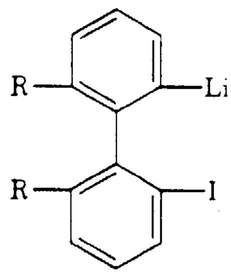

II

worin R die obige Bedeutung hat,
mit einer Verbindung der allgemeinen Formel

$$Y\text{-}P(R^1)_2 \qquad III$$

worin $R^1$ die obige Bedeutung hat und Y eine austretende Gruppe darstellt,
umsetzt, eine so erhaltene Verbindung der allgemeinen Formel

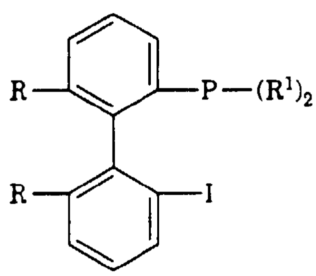

IV

worin R und $R^1$ obige Bedeutung haben,
mit einem Alkyllithium zu einer Verbindung der Formel

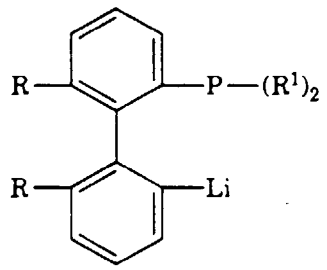

V

worin R und $R^1$ obige Bedeutung haben,
umsetzt, diese wiederum mit einer Verbindung der allgemeinen Formel

$$Y\text{-}P(R^2)_2 \qquad VI$$

worin $R^2$ und Y obige Bedeutung haben,
umsetzt, und dass man zur Herstellung einer Verbindung der Formel I, worin R Hydroxy bedeutet, eine entsprechende Verbindung, worin R niederes Alkoxy darstellt, einer Aetherspaltung unterwirft.

Die Umsetzung einer Verbindung der Formel II mit einer Verbindung der Formel III kann in an sich bekannter Weise erfolgen. Die Umsetzung erfolgt zweckmässig in einem inerten, aprotischen organischen Lösungsmittel, wie z.B. einem aromatischen Kohlenwasserstoff wie Benzol, Toluol usw., einem flüssigen aliphatischen Kohlenwasserstoff wie Pentan, Hexan usw. oder in einem Aether, wie etwa Diäthyläther, Tetrahydrofuran, Dimethoxyäthan und dergleichen oder auch einem Gemisch all dieser Lösungsmittel. Die Reaktion erfolgt auch zweckmässig bei einer Temperatur von etwa Raumtemperatur bis etwa -80°C. Der Druck ist hierbei keine kritische Grösse und die Reaktion kann ohne weiteres bei Atmosphärendruck erfolgen.

Die Umsetzung einer Verbindung der Formel IV mit einem Alkyllithium zu einer Verbindung der Formel V erfolgt vorzugsweise mittels n-Butyllithium, insbesondere jedoch mittels tert. Butyllithium. Die Reaktion kann in den vorhergehend erwähnten Lösungsmitteln durchgeführt werden. Die Temperatur beträgt hierbei zweckmässig von etwa -50°C bis etwa -120°C, vorzugsweise von etwa -60°C bis etwa -80°C. Der Druck ist auch hier nicht kritisch und es kann somit ohne weiteres bei Atmosphärendruck gearbeitet werden.

Die Umsetzung einer Verbindung der Formel V mit einer Verbindung der Formel VI kann analog zur Umsetzung einer Verbindung II mit einer Verbindung III erfolgen.

Die Aetherspaltung einer Verbindung der Formel I, worin R niederes Alkoxy darstellt, kann in an sich bekannter Weise durchgeführt werden, z.B. mittels Bortribromid und dergleichen.

Die als Ausgangsmaterial verwendeten Verbindungen der Formel II, können leicht, in an sich bekannter Weise, durch Behandlung der entsprechenden Dijod-Verbindungen mit einem Alkyllithium, wie etwa n-Butyllithium oder, vorzugsweise, tert. Butyllithium, erhalten werden. Die Reaktionsbedingungen können hierbei analog derjenigen für die Umsetzung einer Verbindung der Formel IV zu einer solchen der Formel V gewählt werden. Um zu gewährleisten, dass lediglich ein Jod durch Lithium ersetzt wird, wird zweckmässig mit etwa äquimolaren Mengen an Reaktionspartnern gearbeitet.

Die vorhergehend erwähnten Dijod-Verbindungen [sowohl in der (R,S), wie auch in der (R) oder (S)-Form], sowie auch die Ausgangsmaterialien der Formeln III und VI sind bekannte Verbindungen oder Analoge bekannter Verbindungen, welche leicht in an sich bekannter Weise hergestellt werden können.

Sämtliche vorhergehend erwähnten Reaktionen werden zweckmässig unter Inertgas, wie z.B. Argon oder Stickstoff, durchgeführt.

Die erfindungsgemässen Phosphorverbindungen der Formel I bilden Komplexe mit Uebergangsmetallen wie etwa Metallen der Gruppe VIII, insbesondere mit Ruthenium, Rhodium und Iridium, welche als Katalysatoren bei asymmetrischen Hydrierungen und auch für enantioselektive Wasserstoffverschiebungen in prochiralen, allylischen Systemen verwendbar sind. Für die erwähnten Hydrierungen sind Ruthenium- und Rhodium-Komplexe bevorzugt, während für Isomerisierungen Rhodium-Komplexe bevorzugt sind. Diese Katalysatoren, d.h. die Komplexe aus einem Metall der Gruppe VIII und den Phosphorverbindungen der Formel I sind neu und ebenfalls Gegenstand der vorliegenden Erfindung.

Die in Frage stehenden Komplexe können in an sich bekannter Weise hergestellt werden, z.B. indem man eine Verbindung der Formel I mit einer Verbindung, welche ein Metall der Gruppe VIII abgeben kann, in einem geeigneten,

inerten organischen oder wässrigen Lösungsmittel umsetzt. Als geeignete, z.B. Rhodium abgebende Verbindungen können beispielsweise genannt werden, organische Rhodium-Komplexe mit Aethylen, Propylen und dergleichen, sowie mit bis-Olefinen, z.B. (Z,Z)-1,5-Cyclooctadien, 1,5-Hexadien, Bicyclo[2.2.1]hepta-2,5-dien oder mit weiteren Dienen, welche mit Rhodium leicht lösliche Komplexe bilden. Bevorzugte, Rhodium abgebende Verbindungen sind z.B. Di-μ-chloro-bis[$\eta^4$-(Z,Z)-1,5-cyclooctadien]dirhodium(I), Di-μ-chloro-bis[$\eta^4$-norbornadien]dirhodium(I), Di-μ-Perfluoracetato-bis[$\eta^4$-(Z,Z)-1,5-cyclooctadien]dirhodium(I), Bis[$\eta^4$-(Z,Z)-1,5-cyclooctadien]rhodium-tetrafluorborat oder Bis [$\eta^4$-(Z,Z)-cyclooctadien]rhodium-perchlorat. Als Iridium abgebende Verbindung kann beispielsweise Di-μ-chloro-bis [$\eta^4$-(Z,Z)-1,5-cyclooctadien]diiridium(I) genannt werden.

Die in Frage stehenden Ruthenium-Komplexe können z.B. durch folgende Formel dargestellt werden

$$Ru(Z)_2L \qquad VIII$$

worin Z Halogen oder die Gruppe A-COO, A niederes Alkyl, Aryl, halogeniertes niederes Alkyl oder halogeniertes Aryl und L einen chiralen Diphosphinliganden der Formel I darstellen.

Diese Komplexe können im Prinzip in an sich bekannter Weise hergestellt werden. Zweckmässig und bevorzugt werden Ruthenium-Komplexe beispielsweise dadurch hergestellt, dass man einen Komplex der Formel

$$[Ru(Z^1)_2L^1{}_m]_p\cdot(H_2O)_q \qquad IX$$

worin $Z^1$ Halogen oder eine Gruppe $A^1$-COO, $A^1$ niederes Alkyl oder halogeniertes niederes Alkyl, $L^1$ einen neutralen Liganden, m die Zahl 1, 2 oder 3, p die Zahl 1 oder 2 und q die Zahl 0 oder 1 darstellen,
mit einem chiralen Diphosphinliganden der Formel I umsetzt, oder, dass man einen Ruthenium-Komplex der Formel

$$Ru(CF_3COO)_2L \qquad X$$

worin L einen chiralen Diphosphinliganden der Formel I darstellt,
mit einem das Anion Z abgebenden Salz, worin Z obige Bedeutung hat, umsetzt.

Der Ausdruck "neutraler Ligand" bedeutet, im Rahmen der vorliegenden Erfindung, einen leicht austauschbaren Liganden wie etwa ein Diolefin, z.B. Norbornadien, (Z,Z)-1,5-Cyclooctadien usw., oder auch ein Nitril wie Acetonitril, Benzonitril und dergleichen. Falls m die Zahl 2 oder 3 darstellt, können die Liganden gleich oder auch verschieden sein.

Die Rutheniumkomplexe der Formel IX sind bekannte Substanzen oder Analoge bekannter Substanzen, welche leicht in zur Herstellung der bekannten analoger Weise erhalten werden können, beispielsweise gemäss Albers, M.O. et al., J. Organomet. Chem. 272, C62-C66 (1984).

Die Umsetzung eines Rutheniumkomplexes der Formel IX mit einem chiralen Diphosphinliganden der Formel I kann in an sich bekannter Weise durchgeführt werden. Diese Reaktion kann zweckmässig in einem inerten organischen Lösungsmittel erfolgen. Als Beispiele derartiger Lösungsmittel können genannt werden, z.B. Aether wie Tetrahydrofuran oder Dioxan, Ketone wie etwa Aceton, niedere Alkohole wie etwa Methanol, Aethanol usw., halogenierte Kohlenwasserstoffe wie Methylenchlorid, Chloroform und dergleichen, oder auch Gemische derartiger Lösungsmittel. Die Reaktion kann zudem bei einer Temperatur zwischen etwa 0°C und etwa 100°C, und vorzugsweise zwischen etwa 15°C und etwa 60°C erfolgen, jedoch unter striktem Ausschluss von Sauerstoff.

Die Umsetzung eines Rutheniumkomplexes der Formel X (erhältlich aus einem Komplex der Formel IX) mit einem das Anion Z enthaltenden Salz kann in an sich bekannter Weise erfolgen. Der Ausdruck ein das Anion Z abgebendes Salz" bedeutet im Rahmen der vorliegenden Erfindung beispielsweise Ammoniumsalze, Alkalimetallsalze oder andere geeignete Metallsalze. Um die Löslichkeit derartiger Salze zu verbessern, können in gewissen Fällen auch Kronenäther oder dergleichen zugesetzt werden.

Wie bereits eingangs erwähnt, sind die erfindungsgemässen Phosphorverbindungen, in Form von Komplexen mit Metallen der Gruppe VIII, und insbesondere Rhodium und Ruthenium, u.a. verwendbar für asymmetrische Hydrierungen. Als besonders geeignete Substrate können in diesem Zusammenhang insbesondere genannt werden, Allylalkohole wie z.B. Geraniol, 6,7-Dihydrogeraniol, 6,7-Dihydrofarnesol, 6,7,10,11-Tetrahydrofarnesol und dergleichen, sowie auch funktionalisierte Ketone wie β-Ketoester, z.B. Acetessigsäuremethyl- oder äthylester usw. oder auch 2-Pyridylketone wie z.B. 2-Acetylpyridin, 2-Pyridyl-2,8-bis(trifluormethyl)-4-chinolylketon und dergleichen.

Bei der Durchführung derartiger Hydrierungen, können diese Komplexe zuerst hergestellt und dann zu einer Lösung der zu hydrierenden Substanz gegeben werden. Alternativ können sie jedoch auch in situ hergestellt werden, z. B. auch in Gegenwart einer zu hydrierenden Substanz.

Die asymmetrische Hydrierung kann in einem geeigneten, unter den Reaktionsbedingungen inerten organischen Lösungsmittel erfolgen. Als derartige Lösungsmittel können insbesondere genannt werden, aromatische Kohlenwasserstoffe wie Benzol, Toluol usw., niedere Alkohole wie z.B. Methanol oder Aethanol, Wasser, Ester wie Aethylacetat, halogenierte Kohlenwasserstoffe wie Methylenchlorid, Chloroform und dergleichen, cyclische Aether wie Tetrahydrofuran oder Dioxan, und dergleichen, oder Gemische derartiger Lösungsmittel.

Das Verhältnis von Metall zu Ligand L liegt zweckmässig zwischen etwa 0,05 und etwa 5 Mol, bzw. zwischen etwa 0,5 und etwa 2 Mol, vorzugsweise bei etwa 1 Mol Metall pro Mol Ligand. Das Verhältnis von Metall, in den Komplexen wie z.B. der Formel VIII, zu den zu hydrierenden Substanzen liegt zweckmässig zwischen etwa 0,0005 und etwa 1 Mol %, vorzugsweise zwischen etwa 0,002 und etwa 0,1 Mol %.

Die asymmetrische Hydrierung mit Komplexen wie z.B. der Formel VIII erfolgt zweckmässig bei einer Temperatur von etwa 0°C bis etwa 150°C. in Abhängigkeit des verwendeten Substrates. Diese Hydrierung erfolgt zweckmässig auch unter Druck, vorzugsweise bei einem Druck von etwa 2 bis etwa 200 bar, besonders bevorzugt von etwa 10 bis etwa 100 bar.

In Analogie zur Herstellung und Verwendung der Verbindungen der Formel I, können ebenfalls auch Verbindungen des Binaphthyl-Typus der folgenden Formel

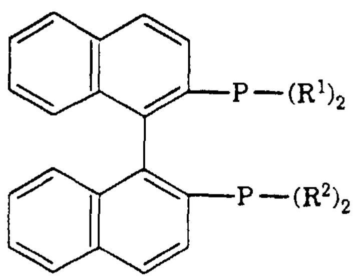

VII

worin $R^1$ und $R^2$ obige Bedeutung haben,

hergestellt und verwendet werden. Die Binaphthylringe können hierbei in üblicher Weise substituiert sein.

Die folgenden Beispiele dienen zur Illustrierung der Erfindung und stellen in keiner Weise irgendeine Beschränkung dar. In diesen Beispielen haben die gewählten Abkürzungen folgende Bedeutung:

DC Dünnschichtchromatographie

GC Kapillar-Gaschromatographie

e.e. Enantiomeric Excess. Der e.e. der Hydrierprodukte wurde durch GC an einer permethylierten Cyclodextrinphase bestimmt.

RT Raumtemperatur

Alle Temperaturen sind in °Celsius angegeben.

Beispiel 1

a) In einem Gemisch aus 100 ml absolutem Toluol, 200 ml Aether und 0,5 ml Triäthylamin, wurden unter Ar-Begasung 8,0 g (0,0162 Mol) (S)-Diphenyl-(2'-jod-6,6'-dimethylbiphenyl-2-yl)phosphin gelöst, auf -65° abgekühlt, 12 ml tert. Butyllithium-Lösung (1,6M in Pentan; 0,019 Mol) zugegeben und das Reaktionsgemisch 1 Stunde bei -60° gerührt. Anschliessend wurden auf einmal 5,0 g (0,021 Mol) Dicyclohexylchlorphosphin zugegeben, mit wenig Toluol nachgespült und die grau-beige Suspension über Nacht bei RT gerührt. Zur Aufarbeitung wurde das Gemisch mit 50 ml Wasser und 50 ml 3N NaOH versetzt, 1/4 Stunde gerührt, mit 300 ml Toluol extrahiert, die organische Phase einmal mit 200 ml Wasser gewaschen, getrocknet ($Na_2SO_4$), filtriert und eingedampft. Nach der Umkristallisation des Rohproduktes aus Aethylacetat, resultierten 6,2 g (68%) (S)-P,P-Dicyclohexyl-P',P'-diphenyl-(6,6'-dimethylbiphenyl-2,2'-diyl)diphosphin als weisse Kristalle; Smp.: 185,4° (99,8% e.e., gemäss HPLC-Analyse an einer Chiracel OD-Phase; GC-Gehalt: 99,2%); $[\alpha]_D^{20}$ +52,3 (c=1; $CHCl_3$).

Auf analoge Weise wurde hergestellt:

(R)-P,P-Dicyclohexyl-P',P'-diphenyl-(6,6'-dimethylbiphenyl-2,2-diyl)diphosphin; Smp.: 186-186,9°; (99,8% e.

e.; GC: 99,3%); $[\alpha]_D^{20}$ -52,8 (c=1; $CHCl_3$).

b) Die als Ausgangsmaterial verwendeten (R)- und (S)-Diphenyl-(2'-jod-6,6'-dimethylbiphenyl-2-yl)phosphine wurden wie folgt hergestellt:

Zu einer auf -76° gekühlten Lösung von 20,0 g (0,046 Mol) (R)-2,2'-Dijod-6,6'-dimethylbiphenyl (T. Frejd and T. Klingstedt, J. Chem. Soc., Chem. Commun. (1983) 1021) gelöst in 430 ml absolutem Toluol und 90 ml Aether wurden unter Ar-Begasung 32 ml einer tert. Butyllithium-Lösung (1,6M in Pentan; 0,051 Mol) zugegeben und das Gemisch 3/4 Stunden bei -75° gerührt. Aus einem Tropftrichter wurden anschliessend innert 1/4 Stunde eine Lösung von 20,1 g (0,092 Mol) Chlordiphenylphosphin in 100 ml absolutem Toluol zugetropft, das Gemisch 1 Stunde bei -70° und nach dem Entfernen des Kühlbades über Nacht bei RT gerührt.

Zur Aufarbeitung wurde das Reaktionsgemisch, eine grau-beige Suspension, mit 150 ml Wasser versetzt, mit 80 ml 3N NaOH alkalisch gestellt und mit 300 ml Toluol extrahiert. Die organische Phase wurde 2 x mit je 200 ml Wasser neutral gewaschen, getrocknet ($Na_2SO_4$), eingedampft und der resultierende Rückstand (32,5 g; gelbes Oel) an 450 g Kieselgel chromatographiert. In drei Hauptfraktionen eluierte man: mit 4,5 1 Hexan 3,2 g unverändertes Ausgangsmaterial, mit 15 1 Hexan-Toluol (95:5)-Gemisch 13,1 g (71,3%) enantiomerenreines Monojodid als weisse Kristalle und mit 2 1 Toluol 1,5 g weisses kristallines (R)-(6,6'-Dimethylbiphenyl-2,2'-diyl)bis(diphenylphosphin) (GC-Gehalt: 75%). Zur Analyse wurde das Monojodid (13,1 g) aus Aethylacetat/Methanol umkristallisiert: (R)-Diphenyl-(2'-jod-6,6'-dimethylbiphenyl-2-yl)phosphin; Smp.: 167,5-168,4°; $[\alpha]_D^{20}$ -44,8 (c=1; $CHCl_3$).

Auf analoge Weise wurde hergestellt:

(S)-Diphenyl-(2'-jod-6,6'-dimethyl-1,1'-biphenyl-2-yl)phosphin; Smp.: 167,5-168,7°; $[\alpha]_D^{20}$ +43,5 (c=1; $CHCl_3$).

## Beispiel 2

In zu Beispiel 1a) analoger Weise wurden folgende Verbindungen hergestellt:

(R)-P,P-Dicyclohexyl-P',P'-di-p-tolyl-(6,6'-dimethylbiphenyl-2,2'-diyl)diphosphin; Smp.: 167°; (98,6% e.e.; GC: 98%); $[\alpha]_D^{20}$ -71,2 (c=1; $CHCl_3$).

(S)-P,P-Dicyclohexyl-P',P'-di-p-tolyl-(6,6'-dimethylbiphenyl-2,2'-diyl)diphosphin; Smp.: 166,1°; (97% e.e.; GC: 98%); $[\alpha]_D^{20}$ +69,4 (c=1; $CHCl_3$).

(R)-P,P-Diphenyl-P',P'-di-2-thienyl-(6,6'-dimethylbiphenyl-2,2'-diyl)diphosphin; Smp.: 151-151,3°; (99,2% e.e.; GC: 99,5%); $[\alpha]_D^{20}$ +71,9 (c=1; $CHCl_3$).

(S)-P,P-Diphenyl-P',P'-di-2-thienyl-(6,6'-dimethylbiphenyl-2,2'-diyl)diphosphin; Smp.: 149-150°; (99,9% e.e.; GC: 99,7%); $[\alpha]_D^{20}$ -70,2 (c=1; $CHCl_3$).

Die nachfolgenden, hier als Ausgangsmaterialien verwendeten Verbindungen wurden in zu Beispiel 2b) analoger Weise hergestellt:

(R)-Di-p-tolyl-(2'-jod-6,6'-dimethylbiphenyl-2-yl)phosphin; Smp.: 135-136°: $[\alpha]_D^{20}$ -55,1 (c=1.0, $CHCl_3$).

(S)-Di-p-tolyl-(2'-jod-6,6'-dimethylbiphenyl-2-yl)phosphin; Smp.: 136,4°: $[\alpha]_D^{20}$ +55,7 (c=1.0, $CHCl_3$).

(R)-Dicyclohexyl-(2'-jod-6,6'-dimethylbiphenyl-2-yl)phosphin; Smp.: 137-139°; $[\alpha]_D^{20}$ -8,6 (c=1, $CHCl_3$).

(S)-Dicyclohexyl-(2'-jod-6,6'-dimethylbiphenyl-2-yl)phosphin; Smp.: 138-140°; $[\alpha]_D^{20}$ +8,7 (c=1, $CHCl_3$).

## Beispiel 3

In zu den Beispielen 1 bzw. 2 analoger Weise, können folgende Verbindungen hergestellt werden:

(S)-5-(2'-Jod-6,6'-dimethylbiphenyl-2-yl)-5H-benzo[b]phosphindol; Smp. 173-174°; $[\alpha]_D^{20}$ +107,7 (c=1, $CHCl_3$).

(R)-5-(2'-Jod-6,6'-dimethylbiphenyl-2-yl)-5H-benzo[b]phosphindol ; Smp. 172-174°; $[\alpha]_D^{20}$ -106,8 (c=1, $CHCl_3$).

(S)-P,P-Dicyclopentyl-P',P'-diphenyl-(6,6'-dimethylphenyl-2,2'-diyl)diphosphin; Smp. 129-130°; $[\alpha]_D^{20}$ +40,4 (c=5, $CHCl_3$).

(R)-P,P-Dicyclopentyl-P',P'-diphenyl-(6,6'-dimethylphenyl-2,2'-diyl)diphosphin; Smp. 129-130°; $[\alpha]_D^{20}$ -39,5 (c=0,6, $CHCl_3$).

(R)-5-(6,6'-Dimethyl-2'-dicyclohexylphosphinobiphenyl-2-yl)-5H-benzo-[b]phosphindol; Smp. 164-165°; $[\alpha]_D^{20}$ -144,6 (c=0,7, $CHCl_3$).

(S)-5-(6,6'-Dimethyl-2'-dicyclohexylphosphinobiphenyl-2-yl)-5H-benzo-[b]phosphindol; Smp. 163-164°; $[\alpha]_D^{20}$ +144 (c=0,7, $CHCl_3$).

(S)-P,P-Diäthyl-P',P'-diphenyl-(6,6'-dimethylbiphenyl-2,2'-diyl)diphosphin; Smp. 108°; $[\alpha]_D^{20}$ +25,0 (c=1, $CHCl_3$).

(R)-P,P-Diäthyl-P',P'-diphenyl-(6,6'-dimethylbiphenyl-2,2'-diyl)diphosphin; Smp. 108°; $[\alpha]_D^{20}$ -24,8 (c=1, $CHCl_3$).

(S)-P,P-Di-2-furyl-P',P'-diphenyl-(6,6'-dimethylbiphenyl-2,2'-diyl)diphosphin; Smp. 125°; $[\alpha]_D^{20}$ +66,7 (c=1, $CHCl_3$).

(R)-P,P-Di-2-furyl-P',P'-diphenyl-(6,6'-dimethylbiphenyl-2,2'-diyl)diphosphin; Smp. 122,5-123,3°; $[\alpha]_D^{20}$ -66,3 (c=1, $CHCl_3$).

(R)-P,P-Dicyclohexyl-P',P'-diphenyl-(6,6'-dimethoxybiphenyl-2,2'-diyl)diphosphin.

(S)-P,P-Dicyclohexyl-P',P'-diphenyl-(6,6'-dimethoxybiphenyl-2,2'-diyl)diphosphin.
(S)-Dicyclohexyl-(2'-jod-6,6'-dimethoxybiphenyl-2-yl)phosphin.
(R)-Dicyclohexyl-(2'-jod-6,6'-dimethoxylbiphenyl-2-yl)phosphin.
(S)-5-(2'-Jod-6,6'-dimethoxybiphenyl-2-yl)-5H-benzo[b]phosphindol,
(R)-5-(2'-Jod-6,6'-dimethoxybiphenyl-2-yl )-5H-benzo[b]phosphindol.
(S)-P,P-Dicyclopentyl-P',P'-diphenyl-(6,6'-dimethoxyphenyl-2,2'-diyl)diphosphin.
(R)-P,P-Dicyclopentyl-P',P'-diphenyl-(6,6'-dimethoxyphenyl-2,2'-diyl)diphosphin.
(R)-5-(6,6'-Dimethoxy-2'-dicyclohexylphosphinobiphenyl-2-yl )-5H-benzo-[b]phosphindol.
(S)-5-(6,6'-Dimethoxy-2'-dicyclohexylphosphinobiphenyl-1-2-yl)-5H-benzo[b]phosphindol.
(S)-P,P-Diäthyl-P',P'-diphenyl-(6,6'-dimethoxybiphenyl-2,2'-diyl)diphosphin.
(R)-P,P-Diäthyl-P',P'-diphenyl-(6,6'-dimethoxybiphenyl-2,2'-diyl)diphosphin.
(S)-P,P-Di-2-furyl-P',P'-diphenyl-(6,6'-dimethoxybiphenyl-2,2'-diyl)diphosphin.
(R)-P,P-Di-2-furyl-P',P'-diphenyl-(6,6'-dimethoxybiphenyl-2,2'-diyl)diphosphin.
(R)-P,P-Dicyclohexyl-P',P'-di-p-tolyl-(6,6'-dimethoxybiphenyl-2,2'-diyl)diphosphin.
(S)-P,P-Dicyclohexyl-P',P'-di-p-tolyl-(6,6'-dimethoxybiphenyl-2,2'-diyl)diphosphin.
(R)-P,P-Diphenyl-P',P'-di-2-thienyl-(6,6'-dimethoxybiphenyl-2,2'-diyl)diphosphin.
(S)-P,P-Diphenyl-P',P'-di-2-thienyl-(6,6'-dimethoxybiphenyl-2,2'-diyl)diphosphin.

Beispiel 4

a) In einem Gemisch aus 150 ml absolutem Toluol und 50 ml Aether wurden unter Argon-Begasung 10,2 g (0,019 Mol) (R)-Diphenyl-(2'-jodo-6,6'-dimethoxybiphenyl-2-yl)phosphin gelöst, die Lösung auf -70° abgekühlt, dann mit 15 ml Butyllithium-Lösung (1,6M in Hexan; 0,023 Mol) versetzt und das Reaktionsgemisch 45 Minuten bei -69° gerührt. Anschliessend wurden bei -65° innert 15 Minuten 10,0 g (0,043 Mol) Dicyclohexylchlorphosphin, gelöst in 50 ml Toluol, zugetropft, und die grau-beige Suspension 1 Stunde bei -65°, dann über Nacht bei Raumtemperatur gerührt. Zur Aufarbeitung wurde das Gemisch mit 85 ml Wasser und 15 ml 3N NaOH versetzt, 15 Minuten gerührt, mit 300 ml Toluol extrahiert, die organische Phase zweimal mit 150 ml Wasser gewaschen, getrocknet ($Na_2SO_4$), filtriert und eingedampft. Nach einer chromatographischen Filtration an 400 g Kieselgel (Hexan/Toluol 1:1) und Umkristallisation des Rohproduktes aus Aethylacetat, erhielt man 4,7 g (R)-P,P-Dicyclohexyl-P',P'-diphenyl-(6,6'-dimethoxybiphenyl-2,2'-diyl)diphosphin [(R)-$Cy_2$MeOBIPHEP] als weisse Kristalle. Smp. 239,3°; $[\alpha]_D^{20}$ = +10,3 (c=1; $CHCl_3$).

Auf analoge Weise wurde hergestellt:

(S)-P,P-Dicyclohexyl-P',P'-diphenyl-(6,6'-dimethoxybiphenyl-2,2'-diyl)diphosphin, [(S)-$Cy_2$MeOBIPHEP].

b) Die als Ausgangsmaterial verwendeten (R)- und (S)-Diphenyl-(2'-jodo-6,6'-dimethoxy-1,1'-biphenyl-2-yl)phosphine wurden wie folgt hergestellt:

Zu einer auf -76° gekühlten Lösung von 13,7 g (0,029 Mol) (S)-2,2'-Dijodo-6,6'-dimethoxy-1,1'-biphenyl, gelöst in 200 ml absolutem Toluol und 50 ml Aether wurden unter Argon-Begasung 18 ml einer tert.-Butyllithium-Lösung (15%ige Lösung in Pentan; 0,028 Mol) zugegeben und das Gemisch 1 Stunde bei -70° gerührt. Aus einem Tropftrichter wurde anschliessend innert 15 Minuten eine Lösung von 13 g (0,062 Mol) Chlordiphenylphosphin in 50 ml absolutem Toluol zugetropft, das Gemisch 1 Stunde bei -70°, und nach dem Entfernen des Kühlbades 1 Stunde bei Raumtemperatur gerührt. Zur Aufarbeitung wurde das Reaktionsgemisch mit 70 ml Wasser versetzt, mit 30 ml 3N NaOH alkalisch gestellt und mit 500 ml Essigester extrahiert. Die organische Phase wurde mit 150 ml Wasser neutral gewaschen, getrocknet ($Na_2SO_4$), eingedampft und der resultierende Rückstand an 300 g Kieselgel chromatographiert. In zwei Hauptfraktionen eluierte man: mit 2,1 l Hexan/Toluol (6:4)-Gemisch 4,0 g unverändertes Ausgangsmaterial und mit 3,5 l Hexan/Toluol (1:1)-Gemisch 9,9 g enantiomerenreines Monojodid, als weisse Kristalle, die direkt in die nächstfolgende Stufe eingesetzt wurden. Aus den polareren Fraktionen konnten noch ca. 120 mg kristallines (S)-MeOBIPHEP isoliert werden. Zur Analyse wurde eine Probe des Monojodids aus Aethylacetat/Methanol umkristallisiert:

(S)-Diphenyl-(2'-jodo-6,6'-dimethoxy-1,1'-biphenyl-2-yl)phosphin; Smp.: 125,7°; $[\alpha]_D^{20}$ = -9,0 (c=0,7; $CHCl_3$).

Auf analoge Weise wurde hergestellt:

(R)-Diphenyl-(2'-jodo-6,6'-dimethoxy-1,1'--biphenyl-2-yl)phospin;
(R,S)-Diphenyl-(2'-jodo-6,6'-dimethoxy-1,1'-biphenyl-2-yl)phosphin; Smp.: 194,0-194,4°.

c) Die gemäss b) als Ausgangsmaterial verwendeten (R)- und (S)-2,2'-Dijod-6,6'-dimethoxy-1,1'-biphenyle wurden wie folgt hergestellt:

12,15 g (0,05 Mol) (S)-2,2'-Diamino-6,6'-dimethoxy-1,1'-biphenyl wurden in einem Gemisch aus 288 ml Wasser und 100 ml konz. Schwefelsäure bei ca. 30°-40° gelöst und die Lösung in einem Kühlbad auf 2° abgekühlt. Zu diesem Gemisch wurde innert 30 Minuten bei 2° eine Lösung aus 9,6 g (0,140 Mol) Natriumnitrit in 25 ml Wasser zugetropft und nach beendeter Zugabe 30 Minuten bei 4° gerührt. Anschliessend wurde mit 150 ml Toluol versetzt, aus einem Tropftrichter innert 5 Minuten eine Lösung aus 42 g (0,253 Mol) Kaliumjodid und 16,8 g (0,1 Mol) Jod in 75 ml Wasser zugetropft und 3 Stunden bei Raumtemperatur gerührt. Zur Aufarbeitung wurde das Reaktionsgemisch mit 300 ml Aethylacetat und 200 ml Toluol extrahiert, die organischen Phasen 2 x mit je 200 ml einer 10%igen wässrigen Natriumthiosulfatlösung und 2 x mit je 150 ml Wasser gewaschen, vereinigt, getrocknet ($Na_2SO_4$), eingedampft und das resultierende Rohprodukt an 150 g Kieselgel chromatographiert. Mit 10 l Hexan/ Dichlormethan-(4:1 bis 1:1)-Gemisch wurde eluiert, einmal aus Hexan umkristallisiert und man erhielt 14,2 g weisses kristallines enantiomerenreines (S)-2,2'-Dijod-6,6'-dimethoxy-1,1'-biphenyl. Smp.: 163,5°; $[\alpha]_D^{20}$ = -55,1° (c=1; $CHCl_3$).

Auf analoge Weise wurde hergestellt:

(R)-2,2'-Dijod-6,6'-dimethoxy-1,1'-biphenyl. Smp.: 152°; $[\alpha]_D^{20}$ = +54,4° (c=1; $CHCl_3$).

d) Die gemäss c) wiederum als Ausgangsmaterial verwendeten (R)- und (S)-2,2'-Diamino-6,6'-dimethoxy-1,1'-biphenyle wurden wie folgt hergestellt:

80 g (0,33 Mol) (rac)-2,2'-Diamino-6,6'-dimethoxy-1,1'-biphenyl wurden in 600 ml Aethylacetat und 150 g (SS)-Di(phenylaminocarbonyloxy)bernsteinsäure [(SS)-DIPACOSA] in einem Gemisch aus 400 ml Aethylacetat und 50 ml Methanol bei ca. 60° gelöst, die beiden Lösungen bei 60° vereinigt und zur Kristallisation über Nacht bei Raumtemperatur stehen gelassen. Nach dem Abnutschen, Waschen (150 ml Aethylacetat) und Trocknen (14 mm Hg; Raumtemperatur; 30 Minuten) des weissen Kristallisats wurden 173,9 g (S)-2,2'-Diamino-6,6'-dimethoxy-1,1'-biphenyl-(SS)-DIPACOSA (1:2)-Assoziat erhalten. [(S)/(R)-Gehalt: 99%/1%].

Zur Verbesserung der Enantiomerentrennung wurde das Kristallisat (173,9 g) in 300 ml Aethylacetat aufgeschlämmt, für 15 Minuten bei 60° gerührt, die Suspension über Nacht bei Raumtemperatur stehen gelassen, abgenutscht, der Rückstand mit Aethylacetat (100 ml) gewaschen, getrocknet (14 mm Hg / Raumtemperatur) und auf diese Weise 154 g (1:2)-Assoziat erhalten [(S)/(R)-Gehalt: 99,7%/0,3%].

Zur Abtrennung des Spaltreagens wurde dieses Material (154 g) in 2 l Aethylacetat gelöst, 700 ml Wasser hinzugefügt und unter Rühren die Wasserphase mit einer ges. Natriumbicarbonat-Lösung auf pH 8 gestellt. Nach dem Abtrennen der organischen Phase, die gewaschen (200 ml Wasser), getrocknet ($Na_2SO_4$) und eingedampft wurde, resultierten 30,9 g öliges (S)-2,2'-Diamino-6,6'-dimethoxy-1,1'-biphenyl [(S)/(R)-Gehalt: 99,8% /0,2%]. $[\alpha]_D^{20}$ = -32,0° (c=1; $CHCl_3$).

Auf analoge Weise wurde, ausgehend von racemischem Diamin mit (RR)-DIPACOSA, das ölige (R)-2,2'-Diamino-6,6'-dimethoxy-1,1'-biphenyl gewonnen, das aus Diäthyläther umkristallisiert werden konnte [(S)/(R)-Gehalt: 0% / 100%]. Smp.: 86,9°; $[\alpha]_D^{20}$ = +32,8° (c=1; $CHCl_3$).

In zum vorhergehenden analoger Weise wurden auch folgende Diphosphine hergestellt:

(S)-P,P-Dicyclopentyl-P',P'-diphenyl-(6,6'-dimethoxybiphenyl-2,2'-diyl)diphosphin; [(S)-$Cyp_2$MeOBIPHEP]. Smp. 210,9°; $[\alpha]_D^{20}$ = -15,7° (c=0,4; $CHCl_3$).

(R)-P,P-Dicyclopentyl-P',P'-diphenyl-(6,6'-dimethoxybiphenyl-2,2'-diyl)diphosphin; [(R)-$Cyp_2$MeOBIPHEP].

(S)-P,P-Diisopropyl-P',P'-diphenyl-(6,6'-dimethoxybiphenyl-2,2'-diyl)diphosphin; [(S)-$Ipr_2$MeOBIPHEP]. Smp. 147,9°; $[\alpha]_D^{20}$ = -29° (c=0,5; $CHCl_3$).

(R)-P,P-Diisopropyl-P',P'-diphenyl-(6,6'-dimethoxybiphenyl-2,2'-diyl)diphosphin; [(R)-$Ipr_2$MeOBIPHEP].

(S)-P,P-Diäthyl-P',P'-diphenyl-(6,6'-dimethoxybiphenyl-2,2'-diyl)diphosphin; $[\alpha]_D^{20}$ = -40° (c=1, $CHCl_3$).

(R)-P,P-Diäthyl-P',P'-diphenyl-(6,6'-dimethoxybiphenyl-2,2'-diyl)diphosphin.

(S)-P,P-Di-α-furyl-P',P'-diphenyl-(6,6'-dimethoxybiphenyl-2,2'-diyl)diphosphin; Smp. 213,9°; $[\alpha]_D^{20}$ = -28,4° (c=0,5, $CHCl_3$).

(R)-P,P-Di-α-furyl-P',P'-diphenyl-(6,6'-dimethoxybiphenyl-2,2'-diyl)diphosphin.

(S)-P,P-Di-α-thienyl-P',P'-diphenyl-(6,6'-dimethoxybiphenyl-2,2'-diyl)diphosphin; Smp. 223,1°; $[\alpha]_D^{20}$ = -102° (c=0,5, $CHCl_3$).

(R)-P,P-Di-α-thienyl-P',P'-diphenyl-(6,6'-dimethoxybiphenyl-2,2'-diyl)diphosphin.

Beispiel 5

a) In einer Glove-Box (02-Gehalt <1 ppm) wurden in einem 50 ml-Glaskolben 10,2 mg (0,025 mMol) Bis-(1,5-Cyclooctadien)rhodium(I)-tetrafluoroborat, 14,1 mg (0,025 mMol) (R)-P,P-Dicyclohexyl-P',P'-diphenyl-(6,6'-dimethylbiphenyl-2,2'-diyl)diphosphin (hergestellt gemäss Beispiel 1) und 8,1 mg (0,025 mMol) Tetrabutylammoniumbromid in 20 ml Toluol suspendiert. Die Suspension wurde anschliessend 60 Minuten gerührt, wobei sich eine orange, klare Lösung bildete.

b) In einer Glove-Box (O2-Gehalt <1 ppm) wurde ein 500 ml-Autoklav mit 14,8 g (40 mMol) 2-Pyridyl-2,8-bis(trifluoromethyl)-4-chinolylketon, mit der oben hergestellten Katalysatorlösung und mit 134 ml Toluol beladen. Die Hydrierung wurde bei 60°, einem konstanten Druck von 60 bar $H_2$ und unter intensivem Rühren durchgeführt. Nach 19 Stunden Hydrierzeit betrug der Umsatz 100% (DC): Die Hydrierlösung wurde am Rotationsverdampfer bei 45°/ 20 mbar eingedampft. Zur Kristallisation des Produktes wurde der Rückstand (13,8 g) in 21 ml Toluol heiss gelöst, langsam auf RT abgekühlt und 16 Stunden gerührt. Durch Abkühlen auf 1° und Rühren während 3 Stunden wurde die Kristallisation vervollständigt. Die gelben Kristalle wurden abfiltriert, mit kaltem Toluol gewaschen und während 18 Stunden bei 50°/20 mbar getrocknet. Man erhielt 12,7 g (92%) (R)-α-(2-Pyridyl)-2,8-bis(trifluoromethyl)-4-chinolinmethanol; Smp. 130-131°; 91,8% e.e.; $[\alpha]_D^{20}$ +17,1° (c=1, MeOH).

Zweimalige Umkristallisation aus Aethanol/Wasser lieferte reines (R)-Enantiomeres [(S)-Isomeres im GC nicht nachweisbar]; $[\alpha]_D^{20}$ = +18,7° (c=1, MeOH); Smp.: 136,5-137,7°.

## Patentansprüche

**1.** Racemische und optisch aktive Phosphorverbindungen der allgemeinen Formel

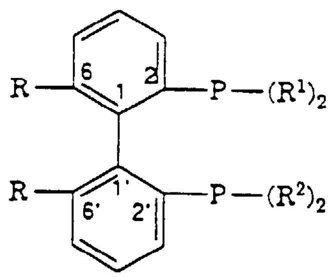

I

worin R ein $C_{1-4}$- Alkyl, $C_{1-4}$-Alkoxy, Hydroxy oder mit einer Schutzgruppe wie Benzyloxy, Allyloxy, Benzyloxymethyloxy , $C_{1-4}$-Alkoxymethyloxy geschützte Hydroxygruppe bedeutet und $R^1$ und $R^2$ voneinander verschieden sind und $C_{1-4}$-Alkyl, $C_{3-7}$-Cycloalkyl, unsubstituierten und/oder ortho,meta, und/oder para einfach- oder mehrfach substituierten Phenylreste, mit $C_{1-4}$-Alkyl- oder Alkoxyresten bedeutet, einen fünfgliedriegen Heteroaromaten der Formeln

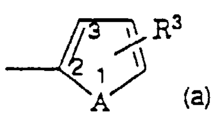 (a) 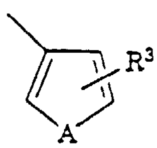 (b) 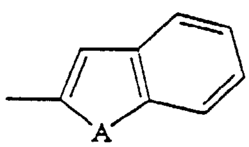 (c) 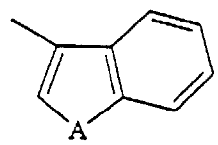 (d)

in denen A Sauerstoff, Schwefel oder $-NR^4$ und die Substituenten $R^3$ Wasserstoff, niederes Alkyl, niederes Alkoxy und $R^4$ niederes Alkyl bedeuten oder ein Gruppe der Formel

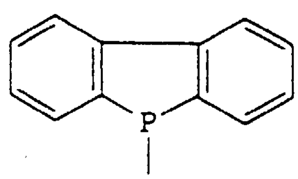

darstellen und worin der Ausdruck "nieder" Verbindungen mit 1 bis 4 Kohlenstoffatomen bezeichnet.

**2.** Racemische und optisch aktive Phosphorverbindungen der Formel I gemäss Anspruch 1, worin R Methoxy oder Methyl bedeutet und $R^1$ und $R^2$ Phenyl, p-Tolyl, Cyclopentyl, Cyclohexyl, 2- oder 3-Furyl oder 2-Thienyl darstellen.

3. (R)- oder (S)-P,P-Dicyclohexyl-P',P'-diphenyl-(6,6'-dimethylbiphenyl-2,2'-diyl)diphosphin.

4. (R)- oder (S)-P,P-Dicyclohexyl-P',P'-di-p-tolyl-(6,6'-dimethylbiphenyl-2,2'-diyl)diphosphin.

5. (R)- oder (S)-P,P-Diphenyl-P',P'-di-2-thienyl-(6,6'-dimethylbiphenyl-2,2'-diyl)diphosphin.

6. (R)- oder (S)-P,P-Dicyclohexyl-P',P'-diphenyl-(6,6'-dimethoxybiphenyl-2,2'-diyl)diphosphin.

7. (R)- oder (S)-P,P-Dicyclopentyl-P',P'-diphenyl-(6,6'-dimethoxybiphenyl-2,2'-diyl)diphosphin.

8. (R)- oder (S)-P,P-Diisopropyl-P',P'-diphenyl-(6,6'-dimethoxybiphenyl-2,2'-diyl)diphospbin.

9. (R)- oder (S)-P,P-Di-a-furyl-P',P'-diphenyl-(6,6'-dimethoxybiphenyl-2,2'-diyl)diphosphin.

10. (R)- oder (S)-P,P-Di-a-thienyl-P',P'-diphenyl-(6,6'-dimethoxybiphenyl-2,2'-diyl)diphosphin.

11. Komplexe von Phosphorverbindungen der Formel I gemäss Anspruch 1 mit einem Metall der Gruppe VIII.

12. Komplexe gemäss Anspruch 11, worin als Metall der Gruppe VIII, Ruthenium, Rhodium und Iridium enthalten sind.

13. Komplexe gemäss Anspruch 12, worin als Metall der Gruppe VIII Ruthenium und Rhodium enthalten sind.

14. Verwendung von Phosphorverbindungen der Formel I nach Anspruch 1 in Form ihrer Komplexe mit einem Metall der Gruppe VIII, als Katalysator bei asymmetrischen Hydrierungen und für enantioselektive Wasserstoffverschiebungen in prochiralen, allylischen Systemen.

## Claims

1. Racemic and optically active phosphorus compounds of the general formula

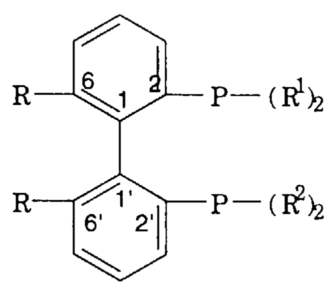

I

wherein R signifies $C_{1-4}$-alkyl, $C_{1-4}$-alkoxy, hydroxy or a hydroxy group protected with a protecting group, such as benzyloxy, allyloxy, benzyloxymethyloxy, $C_{1-4}$-alkoxymethyloxy, and $R^1$ and $R^2$ are different from each other and signify $C_{1-4}$-alkyl, $C_{3-7}$-cycloalkyl, phenyl residues which are unsubstituted and/or ortho, meta and/or para mono- or multiply-substituted with $C_{1-4}$-alkyl or alkoxy residues, a five-membered heteroaromatic of the formulae

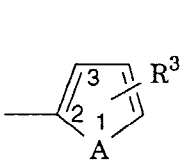 (a) 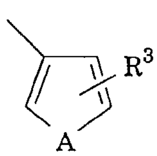 (b) 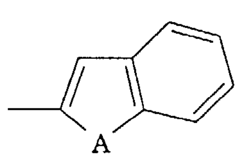 (c) 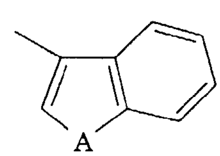 (d)

in which A signifies oxygen, sulphur or $-NR^4$ and the substituents $R^3$ signify hydrogen, lower alkyl, lower alkoxy and $R^4$ signifies lower alkyl, or a group of the formula

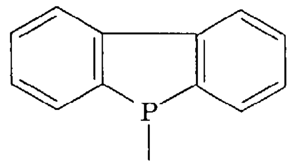

and wherein the term "lower" denotes compounds with 1 to 4 carbon atoms.

2. Racemic and optically active phosphorus compounds of formula I according to claim 1, wherein R signifies methoxy or methyl and $R^1$ and $R^2$ represent phenyl, p-tolyl, cyclopentyl, cyclohexyl, 2- or 3-furyl or 2-thienyl.

3. (R)- or (S)-P,P-Dicyclohexyl-P',P'-diphenyl-(6,6'-dimethylbiphenyl-2,2'-diyl)diphosphine.

4. (R)- or (S)-P,P-Dicyclohexyl-P',P'-di-p-tolyl-(6,6'-dimethylbiphenyl-2,2'-diyl)diphosphine.

5. (R)- or (S)-P,P-Diphenyl-P',P'-di-2-thienyl-(6,6'-dimethylbiphenyl-2,2'-diyl)diphosphine.

6. (R)- or (S)-P,P-Dicyclohexyl-P',P'-diphenyl-(6,6'-dimethoxybiphenyl-2,2'-diyl)diphosphine.

7. (R)- or (S)-P,P-Dicyclopentyl-P',P'-diphenyl-(6,6'-dimethoxybiphenyl-2,2'-diyl)diphosphine.

8. (R)- or (S)-P,P-Diisopropyl-P',P'-diphenyl-(6,6'-dimethoxybiphenyl-2,2'-diyl)diphosphine.

9. (R)- or (S)-P,P-Di-α-furyl-P',P'-diphenyl-(6,6'-dimethoxybiphenyl-2,2'-diyl)diphosphine.

10. (R)- or (S)-P,P-Di-α-thienyl-P',P'-diphenyl-(6,6'-dimethoxybiphenyl-2,2'-diyl)diphosphine.

11. Complexes of phosphorus compounds of formula I according to claim 1 with a metal of Group VIII.

12. Complexes according to claim 11, wherein ruthenium, rhodium and iridium are present as the metal of Group VIII.

13. Complexes according to claim 12, wherein ruthenium, and rhodium are present as the metal of Group VIII.

14. The use of phosphorus compounds of formula I according to claim 1 in the form of their complexes with a metal of Group VIII as catalysts in asymmetric hydrogenations and for enantioselective hydrogen displacements in prochiral, allylic systems.

## Revendications

1. Composés phosphorés optiquement actifs et racémiques de formule générale

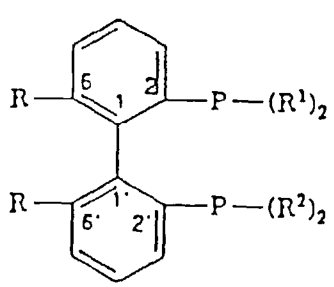

I

dans laquelle R représente un groupe alkyle en $C_{1-4}$, alcoxy en $C_{1-4}$, hydroxyle, ou un groupe hydroxyle protégé par un groupe protecteur tel que benzyloxy, allyloxy, benzyloxyméthyloxy, aloxy($C_{1-4}$)-méthyloxy, $R^1$ et $R^2$ sont différents l'un de l'autre et représentent un groupe alkyle en $C_{1-4}$, cycloalkyle en $C_{3-7}$, des radicaux phényle non

substitués et/ou une ou plusieurs fois substitués en positions ortho, méta et/ou para, par des groupes alkyle en $C_{1-4}$ ou alcoxy, un radical hétéroaromatique à 5 chaînons de formules

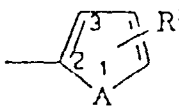 (a) 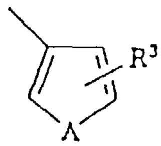 (b) 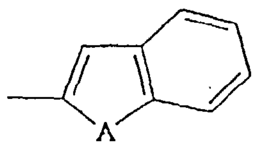 (c) 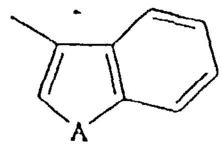 (d)

dans lesquelles A représente un atome d'oxygène ou de soufre ou $-NR^4$ et les substituants $R^3$ représentent un atome d'hydrogène ou un groupe alkyle inférieur, alcoxy inférieur, et $R^4$ représente un groupe alkyle inférieur ou un groupe de formule

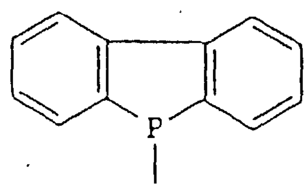

et dans lesquels le terme "inférieur" désigne des composés ayant de 1 à 4 atomes de carbone.

**2.** Composés phosphorés optiquement actifs et racémiques de formule I selon la revendication 1, dans lesquels R représente le groupe méthoxy ou méthyle et $R^1$ et $R^2$ représentent le groupe phényle, p-tolyle, cyclopentyle, cyclohexyle, 2- ou 3-furyle ou 2-thiényle.

**3.** (R)- ou (S)-P,P-dicyclohexyl-P',P'-diphényl-(6,6'-diméthylbiphényl-2,2'-diyl)diphosphine.

**4.** (R)- ou (S)-P,P-dicyclohexyl-P',P'-di-p-tolyl-(6,6'-diméthylbiphényl-2,2'-diyl)diphosphine.

**5.** (R)- ou (S)-P,P-diphényl-P',P'-di-2-thiényl-(6,6'-diméthylbiphényl-2,2'-diyl)diphosphine.

**6.** (R)- ou (S)-P,P-dicyclohexyl-P',P'-diphényl-(6,6'-diméthoxybiphényl-2,2'-diyl)diphosphine.

**7.** (R)- ou (S)-P,P-dicyclopentyl-P',P'-diphényl-(6,6'-diméthoxybiphényl-2,2'-diyl)diphosphine.

**8.** (R)- ou (S)-P,P-diisopropyl-P',P'-diphényl-(6,6'-diméthoxybiphényl-2,2'-diyl)diphosphine.

**9.** (R)- ou (S)-P,P-di-α-furyl-P',P'-diphényl-(6,6'-diméthoxybiphényl-2,2'-diyl)diphosphine.

**10.** (R)- ou (S)-P,P-di-α-thiényl-P',P'-diphényl-(6,6'-diméthoxybiphényl-2,2'-diyl)diphosphine.

**11.** Complexes de composés phosphorés de formule I selon la revendication 1 avec un métal du groupe VIII.

**12.** Complexes selon la revendication 11, dans lesquels, en tant que métal du groupe VIII, sont contenus du ruthénium, du rhodium et de l'iridium.

**13.** Complexes selon la revendication 12, dans lesquels, en tant que métal du groupe VIII, sont contenus du ruthénium et du rhodium.

**14.** Utilisation de composés phosphorés de formule I selon la revendication 1, sous forme de leurs complexes avec un métal du groupe VIII, en tant que catalyseur dans des hydrogénations asymétriques et pour des déplacements énantiosélectifs d'hydrogène dans des systèmes allyliques prochiraux.